# EUROPÄISCHE PATENTSCHRIFT

(11) **EP 0 483 265 B1**
(45) Veröffentlichungstag und Bekanntmachung des Hinweises auf die Patenterteilung: **01.09.1993**
(21) Anmeldenummer: 90911780.6
(22) Anmeldetag: 12.07.1990
(51) Int. Cl.: C02F 1/24

(54) **SCHMUTZWASSERAUFBEREITUNGSANLAGE NACH DEM FLOTATIONS-VERFAHREN**
SEWAGE-TREATMENT PLANT USING THE FLOTATION PROCESS
INSTALLATION DE TRAITEMENT DES EAUX USEES SELON LE PROCEDE PAR FLOTTATION

(30) Priorität: 17.07.1989 EP 89113067
(43) Veröffentlichungstag der Anmeldung: 06.05.1992
(73) Patentinhaber: Zander Aufbereitungstechnik GmbH, D-45205 Essen-Kettwig (DE)
(72) Erfinder: ZEILINGER, Dieter, D-8039 Puchheim-Bhf. (DE)
(74) Vertreter: Cohausz & Florack Patentanwälte
(86) Internationale Anmeldenummer: EP9001140
(87) Internationale Veröffentlichungsnummer: WO9101276

(56) Entgegenhaltungen:
- EP-A- 82 809
- DE-A- 3 127 290
- DE-A- 3 412 217

## Beschreibung

Die Erfindung bezieht sich auf eine Abwasseraufbereitungsanlage, bestehend aus einem Flotationskessel, der durch eine von seinem Boden ausgehende Trennwand in eine oben offene Ringkammer und eine diese umgebende oben offene Ringkammer unterteilt ist, in die das aufzubereitende Schmutzwasser mit Luft und Flockungsmittel vermischt mittels einer Schmutzwasserpumpe über einen im Boden der Ringkammer angeordneten Einlauf förderbar ist, wobei der obere Rand der Trennwand einen Überlauf von der Ringkammer zur zentralen Kammer bildet und im oberen Teil des Flotationskessels ein Ablauf für im Flotationskessel gebildete, den Schmutz bindende Flocken und einem von diesem Ablauf getrennten Ablauf für Reinwasser angeordnet ist.

Bei einer bekannten Schmutzwasseraufbereitungsanlage dieser Art wird durch die Schmutzwasserpumpe das aufzubereitende Schmutzwasser vermischt mit Luft und Flockungsmittel von unten über einen mittig im Flotationskessel angeordneten Schacht in den Flotationskessel gepumpt. Die chemische Reaktion, und zwar die Bildung der Flocken, erfolgt bereits im Schacht. Wegen des Zuflusses des Schmutzwassers über den Schacht ergibt sich in der über dem Schacht liegenden Wasserschicht eine ungeordnete Strömung mit Verwirbelung. Eine optimale Trennung der Flocken von dem Reinwasser über eine kegel- oder pyramidenförmige Verjüngung eines den Flotationskessel oben abschließenden Deckels ist damit nicht gewährleistet. Ein weiterer Nachteil der bekannten Anlage besteht darin, daß wegen des geschlossenen Kessels Sichtkontrollen nicht möglich sind und Revisionsarbeiten nur nach Demontage des Kesseldeckels möglich sind. Auch fehlt es an einer die Schaumauflösung begünstigenden Verdunstungsfläche.

Schließlich besteht ein Nachteil bei der bekannten Schmutzwasseraufbereitungsanlage darin, daß die Vermischung des Schmutzwassers mit Luft nicht optimal ist. Die Luftbeimischung erfolgt nämlich in der Weise, daß in einem Bypass der Pumpe mittels eines Injektors Luft beigemischt wird und daß der so mit Luft angereicherte Schmutzwasserteilstrom zum Eingang der Pumpe zurück- und mit Schmutzwasser zusammengeführt wird, das keinen Luftanteil enthält.

Der DE-A- 3127290 ist eine gattungsgemäße Flotationsvorrichtung mit einer nach oben offenen Kammer bekannt, die die Sichtkontrolle des Reinigungsprozesses ermöglicht. Bei dieser Vorrichtung ist der Einlauf für das verschmutzte Wasser in unmittelbarer Nähe zu dem ebenfalls an der äußeren Ringkammer angeordneten Auslauf für das gereinigte Wasser positioniert. Das verschmutzte Wasser strömt in einer Schraubenlinienströmung in der Ringkammer nach oben. Dabei werden die Verschmutzungen des Wasser an die Luftblasen oder Flocken gebunden. Der sich dadurch an der Oberfläche der Ringkammer bildende Schaum wird mit Hilfe eines Gebläses über die obere Kante der Trennwand in den von der Trennwand umschlossenen Raum geblasen. Anschließend sinkt das gereinige Wasser im Gegenstrom zu dem verschmutzten Wasser zum Ablauf herab.

Nachteilig erweist sich bei dieser Vorrichtung, daß die Gefahr besteht, daß das absinkende gereinigte Wasser durch die Schmutzpartikel des aufsteigenden verschmutzten Wassers erneut verschmutzt wird. Dadurch ist die Wirksamkeit der bekannten Flotationsvorrichtung beeinträchtigt.

Der Erfindung liegt die Aufgabe zugrunde, eine Abwasseraufbereitungsanlage zu schaffen, die mit einem besseren Wirkungsgrad arbeitet.

Diese Aufgabe wird bei einer Abwasseraufbereitungsanlage der eingangs genannten Art dadurch gelöst, daß Mittel zur Einstellung des Wasserspiegels oberhalb des als Überlauf dienenden Randes der Trennwand vorgesehen sind und die Abläufe für die Flocken und das von den Flocken freie Wasser (Reinwasser) räumlich getrennt von dem Einlauf in der zentralen Kammer angeordnet sind, wobei der Ablauf für die Flocken im Bereich des Wasserspiegels und der Ablauf für das Reinwasser unterhalb dieses Wasserspiegels liegen.

Bei der erfindungsgemäßen Abwasseraufbereitungsanlage ergibt sich in der Ringkammer eine definierte Strömung des mit Luft und Flockungsmittel vermischten Wassers. In dieser Ringkammer findet die chemische Reaktion statt, das heißt, hier binden die Flocken den Schmutz. Die Flocken steigen mit dem Schmutzwasser auf und verbleiben bei Erreichen des Wasserspiegels an der Oberfläche, von wo sie in definierter Strömung über den Rand in die zentrale Kammer strömen und über den im Bereich des Wasserspiegels angeordneten Ablauf abgezogen werden. Im Unterschied zum Stand der Technik werden die Flocken somit nicht durch eine Wasserschicht gedrückt, in der es zu Verwirbelungen kommt, die die Trennung der Flocken vom Reinwasser erschweren. Wegen des tieferliegenden Ablaufs für das Reinwasser können die aufschwimmenden Flocken nicht in diesen Ablauf gelangen, sondern nur das Reinwasser. Begünstigt wird der Abzug der aufschwimmenden Flocken weiter dadurch, daß sich in der zentralen Kammer ein Strudel bildet, der die Flocken in den Ablauf hineinzieht.

Die Strudelbildung kann dadurch begünstigt werden, daß der Bodeneinlauf tangential derart angewinkelt an der Ringkammer angeordnet ist, daß das eingeleitete Schmutzwasser die Ringkammer schraubenlinienförmig durchströmt. Die Abscheidung der Flocken, an die die Verschmutzungen gebunden sind, von dem gereinigten Wasser kann dadurch begünstigt werden, daß der Ablauf mittig und nach oben offen in der zentralen Kammer als eine strudelbildende Senke angeordnet ist.

Weitere Maßnahmen, mit denen verhindert werden kann, daß ungewollt Flocken in den Ablauf für das Reinwasser gelangen oder von Flockungsmittel nicht gebundene Schwerstoffe, bestehen darin, daß über dem Ablauf für das Reinwasser ein Schirm angeordnet ist, dessen Außenrand zur Trennwand einen Ringspalt bildet. Der Schirm ist vorzugsweise als Kegel oder als Pyramide ausgebildet, wobei der Ablauf innerhalb des Kegels beziehungsweise der Pyraminde liegt. Für den Abzug der Schwerstoffe aus dem Flotationskessel kann der Boden des Flotationskessels im Bereich der zentralen Kammer eine Schwerstoffsammelfalle aufweisen.

Die Einstellung des Wasserspiegels im Flotationskessel kann auf verschiedene Art und Weise erfolgen, beispielsweise mit einem niveaugesteuerten Ventil. Vorzugsweise ist aber als Mittel für die Einstellung des Wasserspiegels ein in Art einer kommunizierenden Röhre mit dem Ablauf verbundenes Steigrohr mit einem Überlauf vorgesehen. Von der Höhe des einstellbaren Überlaufs des Steigrohres hängt der Wasserspiegel ab. In diesem Fall entfallen aufwendige Steuermaßnahmen.

Für die Beimischung von Luft und Chemikalien, wie Flockungsmittel und eventuell Mittel zur Einstellung des PH-Werstes, ist die Schmutzwasserpumpe saugseitig einerseits an Luft- und Chemikalienversorgungsstellen und andererseits an einer Schmutzwasserleitung angeschlossen. Die angesaugte Luft- und/oder Chemikalienmange läßt sich durch Mengenregler dosieren. In an sich bekannter Weise kann auch bei der Erfindung die Druckseite der Pumpe und deren Saugseite über einen Bypass miteinander verbunden sein. Dadurch wird die schon vorher dem Schmutzwasser beigemischte Luft weiter vermischt. Für die Vermischung als besonders geeignet haben sich Pumpen mit Turbinenschaufeln herausgestellt.

Im folgenden wird die Erfindung anhand einer ein Ausführungsbeispiel darstellenden Zeichnung näher erläutert. Im einzelnen zeigen:
- Fig. 1: einen axial geschnittenen Flotationskesel in isometrischer Darstellung
und

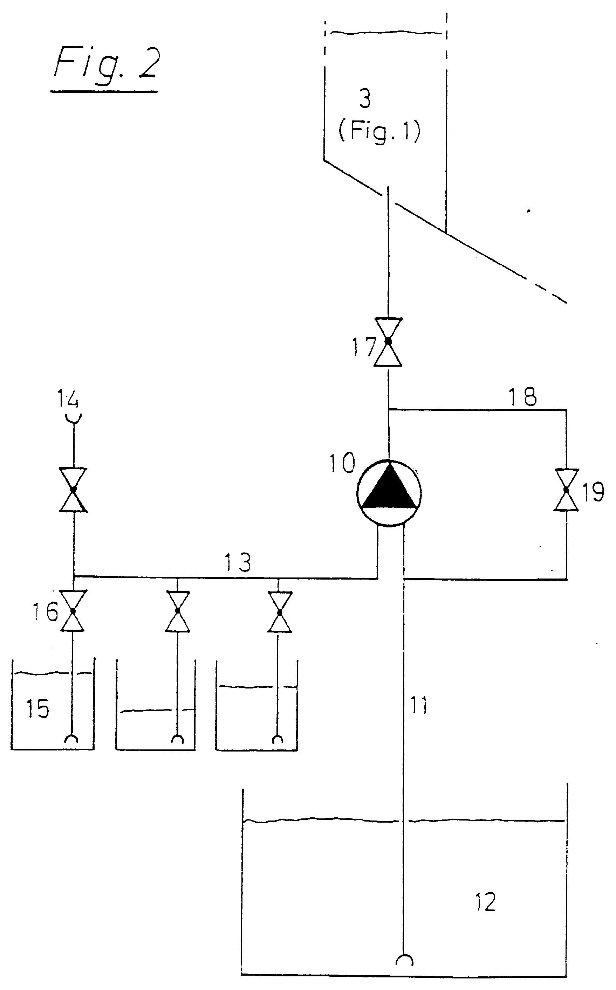

- Fig. 2: ein Flußdiagram für das mit Luft und Chemikalien vermischte Schmutzwasser.

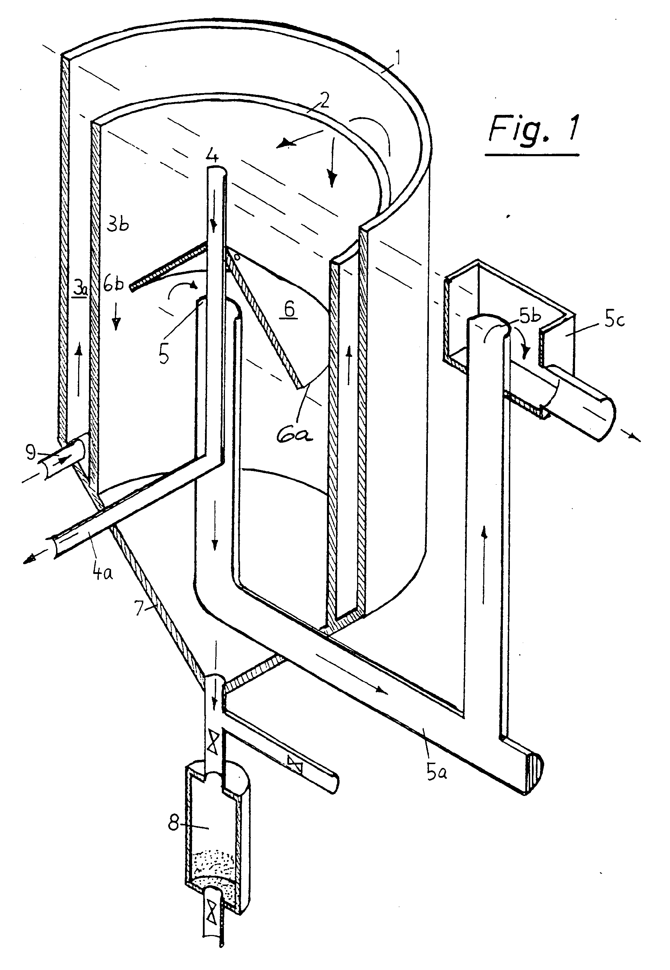

Der in Figur 1 dargestellte Flotationskessel besitzt eine kreiszylinders Außenwand 1 und eine konzentrisch dazu angeordnete zylindrische Trennwand 2. Außenwand 1 und Trennwand 2 bilden eine Ringkammer 3a. Der Flotationskessel weist einen kegelförmigen Boden 7 auf. Der Flotationskessel ist oben offen. In der von der Trennwand 2 gebildeten zentralen Kammer 3b ist mittig ein Ablauf 4 mit einer aus dem Flotationskessel herausgeführten Leitung angeordnet, der auf dem Niveau des oberen Randes der Trennwand 2 liegt. Unterhalb des Ablaufes 4 und konzentrisch dazu ist ein Ablauf 5 vorgesehen, der über eine Leitung 5a nach Art einer kommunizierenden Röhre mit einem Überlauf 5b außerhalb des Flotationskessels verbunden ist. Der Überlauf 5b ist in seinem Niveau etwas oberhalb des oberen Randes der Trennwand 2 angeordnet und liegt innerhalb einer Ablaufkammer 5c. Durch die Lage des Überlaufs 5b wird der Wasserspiegel im Flotationskessel bestimmt. Der Ablauf 5 liegt innerhalb eines Kegels 6, dessen Außenrand 6a mit der Trennwand 2 einen Ringspalt 6b bildet. An der tiefsten Stelle des kegelförmigen Bodens 7 ist eine Schwerstoffalle 8 angeschlossen. In den unteren Bereich der Ringkammer 3a mündet tangential mindestens ein Einlauf 9 für Schmutzwasser, dem Luft, Flockungsmittel und andere Chemikalien, insbesondere Mittel zur Einstellung des PH-Wertes, beigemischt sind.

Für die Zuleitung dieses mit Luft und Chemikalien vermischten Schmutzwassers ist eine Pumpe 10 vorgesehen, die saugseitig über eine Saugleitung 11 mit einem Schmutzwasserbehälter 12 verbunden ist. Über eine andere Saugleitung 13 ist sie an einem Lufteinlaß und an Behälter 15 für verschiedene Chemikalien, wie Flockungsmittel und Mittel zur Einstellung des für die Flotation optimalen PH-Wertes angeschlossen. Die Beizumischende Luft und die beizumischenden Chemikalien können über Dosierventile 16 eingestellt werden. Die Druckseite der Pumpe 10 ist über einen Bypass 18 und ein Ventil 19 mit der Saugleitung 11 verbunden. Über ein Regelventil 17 führt die Druckseite zu dem Einlauf 9 für das Schmutzwasser.

Die Wasseraufbereitungsanlage arbeitet auf folgende Art und Weise. Die Pumpe 10 saugt parallel aus dem Schmutzwasserbehälter 12 Schmutzwasser und aus den Chemikalienbehälter 15 Chemikalien und über den Einlaß 14 Luft an. Die Mengenregelventile 16 für die Chemikalien und die luft werden so eingestellt, daß im Flotationskessel das Schmutzwasser optimal von den Schmutz getrennt werden kann. Das von der Pumpe 10 über den Einlauf 9 tangential in die Ringkammer 3a eingeleitete Schmutzwasser kreist durch die Ringkammer 3a und schraubt sich in der Ringkammer 3a allmählich hoch. Wenn es das obere vom Überlauf 5b bestimmte Niveau erreicht hat, strömt es unter Beibehaltung der Kreisbewegung über den oberen Rand der Trennwand 2. In der zentralen Kammer 3b bildet sich ein Strudel, dessen Ausbildung durch die Ringströmung begünstigt wird. Durch diesen Strudel werden die an der Wasseroberfläche schwimmenden Flocken zum mittigen Ablauf 4 gesogen, während das Reinwasser nach unten durch den Ringspalt 6b in den unteren Bereich der zentralen Kammer 3b strömt. Das Reinwaser wird nach Passieren des Ringspaltes 6b umgelenkt und strömt in den Ablauf 5 ein, während Schwerstoffe nach unten absinken und sich an der tiefsten Stelle des kegeligen Bodens 7 sammeln, von wo sie über die Schwerstoffalle 8 abgezogen werden können.

Die besonderen Vorteile einer solchen Wasseraufbereitungsanlage liegen vor allem in ihrem hohen Wirkungsgrad. Im Vergleich zu herkömmlichen Wasseraufbereitungsanlagen wird der Reinheitsgrad des Reinwassers verbessert, weil wegen der definierten Strömung es keine Verwirbelungen gibt, durch die Flocken im Reinwasser verbleiten und in den Ablauf gelangen. Da der Kessel oben offen ist, ergibt sich ein große Schaumverdunstungsfläche, die sonst notwendige Schaumzerstäuber überflüssig macht. Auch läßt sich wegen des oben offenen Kessels der Flotationsprozeß optisch beobachten. Wegen der unmittelbaren Zugänglichkeit des Kessels für Wartungsarbeiten entfallen die sonst üblichen Montagearbeiten für das Öffnen des Kessels. Schließlich ist die Vermischung des Schutzwassers mit Luft optimal, weil bereits beim Ansaugen dem Schmutzwasser Luft beigemischt wird und die Beimischung durch den Bypass weiter verbessert wird.

## Patentansprüche

1. Abwasseraufbereitungsanlage, bestehend aus einem Flotationskessel, der durch eine von seinem Boden (7) ausgehende Trennwand (2) in eine oben offene zentrale Kammer (3b) und eine diese umgebende oben offene Ringkammer (3a) unterteilt ist, in die das aufzubereitende Schmutzwasser mit Luft und Flockungsmittel vermischt mittels einer Schmutzwasserpumpe (10) über einen im Boden (7) der Ringkammer (3a) angeordneten Einlauf (9) förderbar ist, wobei der obere Rand der Trennwand (2) einen Überlauf von der Ringkammer (3a) zur zentralen Kammer (3b) bildet und im oberen Teil des Flotationskessels ein Ablauf (4) für im Flotationskessel gebildete, den Schmutz bindende Flocken und einem von diesem Ablauf (4) getrennten Ablauf (5) für Reinwasser angeordnet ist,
**dadurch gekennzeichnet,** daß
Mittel (5a) zur Einstellung des Wasserspiegels oberhalb des als überlauf dienenden Randes der Trennwand (2) vorgesehen sind und die Abläufe (4,5) für die Flocken und das von den Flocken freie Wasser (Reinwasser) räumlich getrennt von dem Einlauf (9) in der zentralen Kammer (3b) angeordnet sind, wobei der Ablauf (4) für die Flocken im Bereich des Wasserspiegels und der Ablauf (5) für das Reinwasser unterhalb dieses Wasserspiegels liegen.

2. Schmutzwasseraufbereitungsanlage nach Anspruch 1, **dadurch gekennzeichnet,** daß der Bodeneinlauf (9) tangential derart angewinkelt an der Ringkammer (3) angeordnet ist, daß das eingeleitete Schmutzwasser die Ringkammer (3) schraubenlinienförmig durchströmt.

3. Schmutzwasseraufbereitungsanlage nach Anspruch 2, **dadurch gekennzeichnet,** daß mehrere Bodeneinläufe (9) vorgesehen sind.

4. Schmutzwasseraufbereitungsanlage nach einem der Ansprüche 1 bis 3,
**dadurch gekennzeichnet,** daß der Ablauf (4) mittig und nach oben offen in der zentralen Kammer als eine strudelbildende Senke für die Flocken angeordnet ist.

5. Schmutzwasseraufbereitungsanlage nach einem der Ansprüche 1 bis 4,
**dadurch gekennzeichnet,** daß über dem Ablauf (5) für das Reinwasser ein Schirm (6) angeordnet ist, dessen Außenrand (6a) mit der Trennwand (2) einen Ringspalt (6b) bildet.

6. Schmutzwasseraufbereitungsanlage nach Anspruch 5, **dadurch gekennzeichnet,** daß der Schirm (6) als Kegel oder Pyramide ausgebildet ist, in dem beziehungsweise in der der Ablauf (5) liegt.

7. Schmutzwasseraufbereitungsanlage nach einem der Ansprüche 1 bis 6,
**dadurch gekennzeichnet,** daß der Boden (7) des Flotationskessels im Bereich der zentrale Kammer (3b) eine Schwerstoffsammelfalle (8) aufweist.

8. Schmutzwasseraufbereitungsanlage nach einem der Ansprüche 1 bis 7,
**dadurch gekennzeichnet,** daß als Mittel für die Einstellung des Wasserspiegels ein nach Art einer kommunizierenden Röhre mit dem Ablauf (5) verbundenes Steigrohr mit einem Überlauf (5b) vorgesehen ist.

9. Schmutzwasseraufbereitungsanlage nach einem der Ansprüche 1 bis 8,
**dadurch gekennzeichnet,** daß die Schmutzwasserpumpe (10) saugseitig einerseits an Luft- und Chemikalienversorungsstellen (14,15) und andererseits an einer Schmutzwasserleitung (11) angeschlossen ist.

10. Schmutzwasseraufbereitungsanlage nach Anspruch 8,
**dadurch gekennzeichnet,** daß die angesaugte Luft- und/oder Chemikalienmenge durch Mengenregler (16) dosierbar ist.

11. Schmutzwasseraufbereitungsanlage nach Anspruch 9 oder 10,
**dadurch gekennzeichnet,** daß die Druckseite der Pumpe (10) mit deren Saugseite über einen Bypass (18) verbunden ist.

## Revendications

1. Installation de traitement des eaux usées, constituée d'un bassin de flottation qui est divisé, par une paroi séparatrice (2) partant de son fond (7), en une chambre centrale (3b) ouverte en haut et une chambre annulaire (3a) ouverte en haut qui l'entoure, dans laquelle l'eau usée à traiter, mélangée à de l'air et à un floculant, peut être transportée, au moyen d'une pompe à eaux usées (10), par une entrée (9) disposée dans le fond (7) de la chambre annulaire (3a), le bord supérieur de la paroi séparatrice (2) formant un trop-plein de la chambre annulaire (3a) à la chambre centrale (3b) et une décharge (4) dans la partie supérieure du bassin de flottation pour les flocons liant les déchets formés dans le bassin de flottation et une décharge (5) pour l'eau propre séparée de cette décharge (4) étant formées,
caractérisée en ce que sont prévus des moyens (5a) pour le réglage du niveau de l'eau au-dessus du bord de la paroi séparatrice (2) servant de trop-plein et les décharges (4, 5) pour les flocons et celle pour l'eau sans flocons (eau propre) sont disposées séparées spatialement de l'entrée (9) dans la chambre centrale (3b), la décharge (4) pour les flocons se trouvant dans la région du niveau de l'eau et la décharge (5) pour l'eau propre au-dessous de ce niveau de l'eau.

2. Installation de traitement des eaux usées selon la revendication 1,
caractérisée en ce que l'entrée (9) du fond est disposée inclinée tangentiellement à la chambre annulaire (3) de telle manière que l'eau usée introduite traverse la chambre annulaire (3) sous forme hélicoïdale.

3. Installation de traitement des eaux usées selon la revendication 2,
caractérisée en ce que plusieurs entrées (9) de fond sont prévues.

4. Installation de traitement des eaux usées selon l'une des revendications 1 à 3,
caractérisée en ce que la décharge (4) est disposée centralement et ouverte vers le haut dans la chambre centrale sous forme d'une dépression formant des tourbillons pour les flocons.

5. Installation de traitement des eaux usées selon l'une des revendications 1 à 4,
caractérisée en, ce qu'un écran (6) pour l'eau propre est disposé au-dessus de la décharge (5), dont le bord externe (6a) forme avec la paroi séparatrice (2) une fente annulaire (6b).

6. Installation de traitement des eaux usées selon la revendication 5,
caractérisée en ce que l'écran (6) est réalisé sous forme de cône ou de pyramide dans lequel se trouve la décharge (5).

7. Installation de traitement des eaux usées selon l'une des revendications 1 à 6,
caractérisée en ce que le fond (7) du bassin de flottation présente un piège (8) pour produits lourds dans la région de la chambre centrale (3b).

8. Installation de traitement des eaux usées selon l'une des revendications 1 à 7,
caractérisée en ce qu'un tuyau de montée avec un trop-plein (5b), relié à la décharge (5) du type d'un tube communiquant est prévu comme moyen de réglage du niveau de l'eau.

9. Installation de traitement des eaux usées selon l'une des revendications 1 à 8,
caractérisée en ce que la pompe à eaux usées (10) est reliée du côté aspiration d'une part à des emplacements d'alimentation en air et en produits chimiques (14, 15) et d'autre part à une conduite d'eaux usées (11).

10. Installation de traitement des eaux usées selon la revendication 8,
caractérisée en ce que la quantité d'air et/ou de produits chimiques aspirée peut être réglée par un régulateur de volume (16).

11. Installation de traitement des eaux usées selon la revendication 9 ou 10,
caractérisée en ce que le côté pression de la pompe (10) est relié à son côté aspiration par l'intermédiaire d'une dérivation (18).

## Claims

1. A sewage treatment plant, comprising a flotation boiler subdivided by a partition (2) extending from the boiler bottom (7) into a central chamber (3b) open at the top and enclosed by an annular chamber (3a) which is open at the top and into which the sewage to be treated can be conveyed, mixed with air and flocculation agent, by means of a sewage pump (10) via an inlet (9) disposed in the bottom (7) of the annular chamber (3a), while the top edge of the partition (2) forms an overflow from the annular chamber (3a) to the central chamber (3b), and disposed in the upper part of the flotation boiler is a discharge (4) for sewage-bonding flakes formed in the flotation boiler and a discharge (5) for clean water which is separated from the first-mentioned discharge (4), characterized in that means (5a) are provided for adjusting the water level above the edge, acting as an overflow, of the partition (2), and the discharges (4, 5) for the flakes and the flake-free water (clean water)'are disposed spatially separated from the inlet (9) in the central chamber (3b), the discharge (4) for the flakes being disposed in the zone of the water level and the discharge (5) for the clean water being disposed below the water level.

2. A sewage treatment plant according to claim 1, characterized in that the bottom inlet (9) is disposed at such an angle tangentially to the annular chamber (3) that the introduced sewage flows through the annular chamber (3) helically.

3. A sewage treatment plant according to claim 2, characterized in that a number of bottom inlets (9) are provided.

4. A sewage treatment plant according to one of claims 1 to 3, characterized in that the discharge (4) is disposed centrally and open at the top in the central chamber as an eddy-forming sink for the flakes.

5. A sewage treatment plant according to one of claims 1 to 4, characterized in that disposed above the discharge (5) for the clean water is a screen (6) whose outer edge (6a) cooperates with the partition (2) to form an annular gap (6b).

6. A sewage treatment plant according to claim 5, characterized in that the screen (6) takes the form of a cone or pyramid in which the discharge (5) is disposed.

7. A sewage treatment plant according to one of claims 1 to 6, characterized in that the bottom (7) of the flotation boiler has a dense-medium material collecting trap (8) in the zone of the central chamber (3b).

8. A sewage treatment plant according to one of claims 1 to 7, characterized in that a riser having an overflow (5b) and connected after the fashion of a communicating pipe to the discharge (5) is provided as the means for adjusting the water level.

9. A sewage treatment plant according to one of claims 1 to 3, characterized in that the sewage pump (10) is connected on the intake side on the one hand to air and chemicals supplying stations (14, 15) and on the other hand to a sewage pipe (11).

10. A sewage treatment plant according to claim 8, characterized in that the quantity of air and/or chemicals sucked in can be metered by a volume governor (16).

11. A sewage treatment plant according to claims 9 or 10, characterized in that the delivery side of the pump (10) is connected to its intake side via a bypass (18).
